(19) Europäisches Patentamt
European Patent Office
Office européen des brevets

(11) Veröffentlichungsnummer : **0 425 857 B1**

(12) **EUROPÄISCHE PATENTSCHRIFT**

(45) Veröffentlichungstag der Patentschrift : **10.02.93 Patentblatt 93/06**

(51) Int. Cl.$^5$ : **A01N 43/653,** // (A01N43/653, 43:84, 43:40)

(21) Anmeldenummer : **90119475.3**

(22) Anmeldetag : **11.10.90**

# (54) Fungizide Mischung.

(30) Priorität : **21.10.89 DE 3935113**

(43) Veröffentlichungstag der Anmeldung : **08.05.91 Patentblatt 91/19**

(45) Bekanntmachung des Hinweises auf die Patenterteilung : **10.02.93 Patentblatt 93/06**

(84) Benannte Vertragsstaaten : **AT BE CH DE DK ES FR GB GR IT LI NL SE**

(56) Entgegenhaltungen : **EP-A- 0 196 038**
**DE-A- 3 736 651**

(73) Patentinhaber : **BASF Aktiengesellschaft**
**Carl-Bosch-Strasse 38**
**W-6700 Ludwigshafen (DE)**

(72) Erfinder : **Seele, Rainer, Dr.**
**Leiblstrasse 3**
**W-6701 Fussgoenheim (DE)**
Erfinder : **Loecher, Friedrich, Dr.**
**Kropsburgstrasse 34**
**W-6703 Limburgerhof (DE)**
Erfinder : **Saur, Reinhold, Dr.**
**Koenigsberger Strasse 9**
**W-6737 Boehl-Iggelheim (DE)**
Erfinder : **Ammermann, Eberhard, Dr.**
**Sachsenstrasse 3**
**W-6700 Ludwigshafen (DE)**
Erfinder : **Lorenz, Gisela, Dr.**
**Erlenweg 13**
**W-6730 Neustadt (DE)**

EP 0 425 857 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft fungizide Mischungen mit synergistischer fungizider Wirkung und Verfahren zur Bekämpfung von Pilzen mit diesen Mischungen.

Es ist bekannt, 2-(1,2,4-Triazol-1-ylmethyl)-2-(4-fluorphenyl)-3-(2-chlorphenyl)-oxiran der Formel

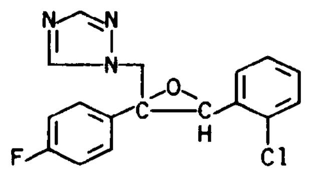

oder eines seiner Salze als Fungizid zu verwenden (EP 196 038). Es ist ferner bekannt, die Wirkstoffe Fenpropimorph, 4-[3-(4-tert.-Butylphenyl)-2-methylpropyl]-cis-2,6-dimethylmorpholin der Formel

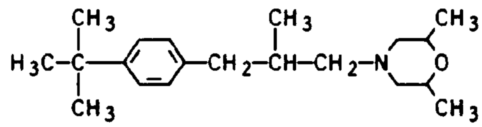

oder seine Salze, Fenpropidin, N-[3-(4-tert.-Butylphenyl)-2-methylpropyl]-piperidin der Formel

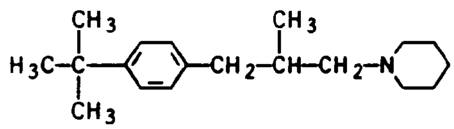

oder seine Salze, oder den Wirkstoff Tridemorph, N-Tridecyl-2,6-dimethylmorpholin der Formel

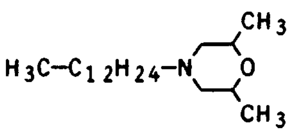

oder seine Salze als Fungizide zu verwenden (DE-A-27 52 096, 27 52 135, 11 65 930).

Es wurde nun gefunden, daß eine Mischung aus

a) 2-(1,2,4-Triazol-1-ylmethyl)-2-(4-fluorphenyl)-3-(2-chlorphenyl)-oxiran der Formel I

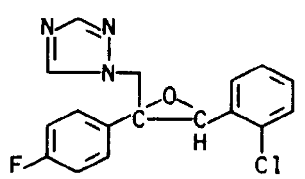

und

b) einer heterocyclischen Verbindung der Formel II

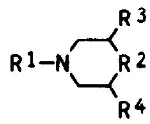

in der
$R^1$ = Tridecyl ($CH_3$-$C_{12}H_{24}$-) oder den Rest

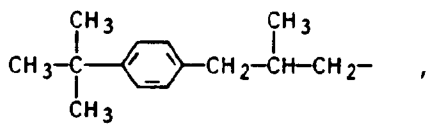

$R^2$ = $CH_2$ oder O
$R^3$, $R^4$ = Methyl oder H bedeutet oder deren pflanzenverträglichem Salz oder Metallkomplexverbindung eine synergistische fungizide Wirkung hat. Das Mischungsverhältnis (Gewichtsverhältnis) der Verbindungen a) und b) wird so gewählt, daß eine synergistische fungizide Wirkung auftritt, beispielsweise Verbindung a) : Verbindung b) wie 5 : 1 bis 1 : 5, insbesondere 3 : 1 bis 1 : 3, vorzugsweise 2 : 1 bis 1 : 2.

2-(1, 2, 4-Triazol-1-ylmethyl)-2-(4-fluorphenyl)-3-(2-chlorphenyl)-oxiran, die Komponente a), kann in vier stereoisomeren Formen vorliegen, die unterschiedliche fungizide Wirkung haben. Bevorzugt werden die beiden cis-Isomeren, d.h. jene Enantiomeren, bei denen die Triazolylmethylgruppe und die 2-Chlorphenylgruppe auf der gleichen Seite des Oxiranringes stehen. Fenpropimorph tritt in zwei enantiomeren Formen auf, von denen das (-)-Enantiomere, das S-Konfiguration besitzt, als Wirkungspartner bevorzugt wird. Die Erfindung schließt Gemische reiner Isomeren der Verbindungen a) und b) mit ein, insbesondere Gemische aus einem cis-Enantiomeren des 2-(1,2,4-Triazol-1-ylmethyl)-2-(4-fluorphenyl)-3-(2-chlorphenyl)-oxiran mit dem (-)cis-Enantiomeren des Fenpropimorph.

Die Erfindung schließt auch Mittel ein, bei denen die Wirkstoff-Komponente a) 2-(1,2,4-Triazol-1-ylmethyl)-2-(4-fluorphenyl)-3-(2-chlorphenyl)-oxiran, überwiegend in Form der beiden cis-Enantiomeren vorliegt.

Salze werden hergestellt durch Umsetzung mit Säuren z.B. Halogenwasserstoffsäuren wie Fluorwasserstoffsäure, Chlorwasserstoffsäure, Bromwasserstoffsäure oder Jodwasserstoffsäure oder Schwefelsäure, Phosphorsäure, Salpetersäure oder organischen Säuren wie Essigsäure, Triflouressigsäure, Trichloressigsäure, Propionsäure, Glycolsäure, Milchsäure, Bernsteinsäure, Zitronensäure, Benzoesäure, Zimtsäure, Oxalsäure, Ameisensäure, Benzolsulfonsäure, p-Toluolsulfonsäure, Methansulfonsäure, Salicylsäure, p-Aminosalicylsäure oder 1,2-Naphthalin-disulfonsäure.

Komplexe können wahlweise nur eine Komponente a) oder eine Komponente b) oder auch mehrere Komponenten b) enthalten. Es lassen sich auch Metallkomplexe herstellen, die beide Komponenten a) und b) miteinander in einem gemischten Komplex enthalten.

Metallkomplexe werden hergestellt aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten der Metalle der zweiten Hauptgruppe wie Calcium und Magnesium und der dritten und vierten Hauptgruppe wie Aluminium, Zinn oder Blei sowie der ersten bis achten Nebengruppe wie Chrom, Mangan, Eisen, Kobalt, Nickel, Kupfer, Zink. Bevorzugt werden die Nebengruppen-Elemente der 4. Periode. Die Metalle können dabei in den verschiedenen ihnen zukommenden Wertigkeiten vorliegen. Die Metallkomplexe können ein- oder mehrkernig auftreten, d.h. sie können einen oder mehrere organische Molekülanteile als Liganden enthalten, wie etwa Mischkomplexe aus 2-(1,2,4-Triazol-1-ylmethyl)-2-(4-fluorphenyl)-3-(2-chlorphenyl)-oxiran und Fenpropimorph, Fenpropidin oder Tridemorph.

In der Praxis setzt man vorteilhaft die reinen Wirkstoffe a) und b) ein, denen man auch weitere agrarchemische Aktivsubstanzen wie Insektizide, Akarizide, Nematizide, Herbizide, weitere Fungizide, Wachstumsregulatoren und/oder Düngemittel zufügen kann.

Die neuen Mischungen zeichnen sich, allgemein ausgedrückt, durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden.

Besonders interessant sind die fungiziden Verbindungen für die Bekämpfung einer Vielzahl von Pilzen an verschiedenen Kulturpflanzen oder ihren Samen, insbesondere Weizen, Roggen, Gerste, Hafer, Reis, Mais,

Rasen, Baumwolle, Soja, Kaffee, Zuckerrohr, Obst und Zierpflanzen im Gartenbau, Weinbau sowie Gemüse - wie Gurken, Bohnen und Kürbisgewächse -.

Die neuen Verbindungen sind insbesondere geeignet zur Bekämpfung folgender Pflanzenkrankheiten:
Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia-Arten an Baumwolle und Rasen,
Ustilago-Arten an Getreide und Zuckerrohr,
Venturia inaequalis (Schorf) an Äpfeln,
Helminthosporium-Arten an Getreide,
Septoria nodorum an Weizen,
Botrytis cinerea (Grauschimmel) an Erdbeeren, Reben,
Cercospora arachidicola an Erdnüssen,
Pseudocercosporella herpotrichoides an Weizen, Gerste,
Pyricularia oryzae an Reis,
Phytophthora infestans an Kartoffeln und Tomaten,
Fusarium- und Verticillium-Arten an verschiedenen Pflanzen,
Plasmopara viticola an Reben,
Alternaria-Arten an Gemüse und Obst.

Die Verbindungen werden angewendet, indem man die Pflanzen mit fungizid wirksamen Mengen der Mischungen besprüht oder bestäubt oder die Samen der Pflanzen mit den Mischungen behandelt. Die Anwendung erfolgt vor oder nach der Infektion der Pflanzen oder Samen durch die Pilze. Es werden die Pilze oder die vor Pilzbefall zu schützenden Pflanzen, Saatgüter, Materialien oder der Erdboden mit einer fungizid wirksamen Menge der Mischung behandelt.

Die Anwendung kann auch in der Weise erfolgen, daß die Wirkstoffe a) und b) in kurzem Abstand nacheinander einzeln verwendet werden, so daß sich die Mischung erst auf der Pflanze oder dem Saatgut bildet.

Die neuen Mischungen können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken; sie sollen in jedem Fall eine feine und gleichmäßige Verteilung der wirksamen Substanz gewährleisten. Die Formulierungen werden in bekannter Weise hergestellt, z.B. durch Verstrecken der Mischung mit Lösungsmitteln und/oder Trägerstoffen, gegebenenfalls unter Verwendung von Emulgiermitteln und Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel, wie nichtionogene und anionische Emulgatoren (z.B. Polyoxyethylen-Fettalkohol-Ether, Alkylsulfonate und Arylsulfonate) und Dispergiermittel, wie Lignin-Sulfitablaugen und Methylcellulose.

Die fungiziden Mittel enthalten im allgemeinen zwischen 0,1 und 95, vorzugsweise zwischen 0,5 und 90 Gew.% der Mischung.

Die Aufwandmengen liegen je nach Art des gewünschten Effektes zwischen 0,02 und 3 kg Mischung oder mehr je ha. Die neuen Mischungen können auch im Materialschutz (Holzschutz) eingesetzt werden, z.B. gegen Paecilomyces variotii. Bei der Saatgutbehandlung werden im allgemeinen Mengen von 0,001 bis 50 g, vorzugsweise 0,01 bis 10 g Mischung je Kilogramm Saatgut benötigt.

Die Mittel bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweiise durch Versprühen, Vernebeln, Verstäuben, Verstreuen, Beizen oder Gießen.

Beispiele für solche Zubereitungen sind:

I. Man vermischt 90 Gew.-Teile der Mischung der Verbindung a) mit Fenpropimorph mit 10 Gew.-Teilen N-Methyl-$\alpha$-pyrrolidon und erhält eine Lösung, die zur Anwendung in Form kleinster Tropfen geeignet ist.

II. 20 Gew.-Teile der Mischung der Verbindung a) mit Fenpropidin werden in einer Mischung gelöst, die aus 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure und 5 Gew.-Teilen des Anlagerungsproduktes und 40 Mol Ethylenoxid an 1 Mol Ricinusöl besteht. Durch Ausgießen und feines Verteilen der Lösung in Wasser erhält man eine wäßrige Dispersion.

III. 20 Gew.-Teile der Mischung der Verbindung a) mit Tridemorph werden in einer Mischung gelöst, die aus 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

IV. 20 Gew.-Teile der Mischung der Verbindung a) mit Fenpropimorph werden in einer Mischung gelöst, die aus 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

V. 80 Gew.-Teile der Mischung der Verbindung a) mit Fenpropidin werden mit 3 Gew.-Teilen des Natriumsalzes der Diisobutylnaphthalin-$\alpha$-sulfonsäure, 10 Gew.-Teilen des Natriumsalzes einer Ligninsulfonsäure aus einer Sulfitablauge und 7 Gew.-Teilen pulverförmigem Kieselsäuregel gut vermischt und in einer Hammermühle vermahlen. Durch feines Verteilen der Mischung in Wasser erhält man eine Spritzbrühe.

VI. 3 Gew.-Teile der Mischung der Verbindung a) mit Tridemorph werden mit 97 Gew.-Teilen feinteiligem Kaolin innig vermischt. Man erhält auf diese Weise ein Stäubemittel, das 3 Gew.% des Wirkstoffs enthält.

VII. 30 Gew.-Teile der Mischung der Verbindung a) mit Fenpropimorph werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 40 Gew.-Teile der Mischung der Verbindung a) mit Fenpropidin werden mit 10 Gew.-Teilen Natriumsalz eines Phenolsulfonsäure-harnstoff-formaldehyd-Kondensates, 2 Gew.-Teilen Kieselgel und 48 Gew.-Teilen Wasser innig vermischt. Man erhält eine stabile wäßrige Dispersion. Durch Verdünnen mit Wasser erhält man eine wäßrige Dispersion.

IX. 20 Gew.-Teile der Mischung der Verbindung a) mit Tridemorph werden mit 2 Gew.-Teilen Calciumsalz der Dodecylbenzolsulfonsäure, 8 Gew.-Teilen Fettalkoholpolyglykolether, 2 Gew.-Teilen Natriumsalz eines Phenolsulfonsäure-harnstoff-formaldehyd-Kondensats und 68 Gew.-Teilen eines paraffinischen Mineralöls innig vermischt. Man erhält eine stabile ölige Dispersion.

Die erfindungsgemäßen Mischungen können in diesen Anwendungsformen auch zusammen mit anderen Wirkstoffen vorliegen, wie z.B. Herbiziden, Insektiziden, Wachstumsregulatoren und Fungiziden, oder auch mit Düngemitteln vermischt und ausgebracht werden. Beim Vermischen mit Fungiziden erhält man dabei in vielen Fällen eine Vergrößerung des fungiziden Wirkungsspektrums.

Anwendungsbeispiele

Beispiel 1

Eradikative Wirkung gegen Weizenmehltau

Weizenpflanzen der Sorte "Kanzler" wurden im 3-Blattstadium mit Weizenmehltau (Erysiphe graminis var. tritici) inokuliert und bei einem Pilzbefall von etwa 5 % mit den wäßrigen Wirkstoffaufbereitungen in den angegebenen Konzentrationen behandelt. Die Wassermenge entsprach 400 l/ha. Die Pflanzen wurden im Gewächshaus für 20 Tage bei 18 bis 22°C kultiviert. Danach erfolgte die Auswertung durch Feststellung der befallenen Blattfläche in Prozent. Diese Werte wurden in Wirkungsgrade umgerechnet. Die zu erwartenden Wirkungsgrade der Wirkstoffmischung wurden nach der Colby-Formel (Colby, S.R. "Calculating synergistic and antagonistic responses of herbicide combinations", Weeds, 15 , S. 20 - 22, 1967) ermittelt und mit den beobachteten Wirkungsgraden verglichen.

Die Werte für die fungizide Wirkung schwanken zwischen den einzelnen Versuchen, weil die Pflanzen in den einzelnen Versuchen unterschiedlich starken Befall aufweisen und dadurch auch die Zahlenwerte der fungiziden Wirkung unterschiedlich ausfallen. Es können daher nur die Ergebnisse innerhalb desselben Versuchs miteinander verglichen werden.

$$\text{Colby - Formel} \qquad E = X + Y - \frac{x \cdot y}{100}$$

zu erwartender Wirkungsgrad, ausgedrückt in % der unbehandelten

E = Kontrolle, beim Einsatz der Wirkstoffe A und B in den Konzentrationen von m und n

X = der Wirkungsgrad, ausgedrückt in % der unbehandelten Kontrolle, beim Einsatz des Wirkstoffes A in einer Konzentration von m

Y = der Wirkungsgrad, ausgedrückt in % der unbehandelten Kontrolle, beim Einsatz des Wirkstoffes B in einer Konzentration von n

Versuch 1: Erysiphe graminis-Test (Weizen) eradikativ

| Wirkstoff | Wirkstoffkonzentration in der Spritzbrühe in % | Wirkungsgrad in % der unbehandelten Kontrolle |
|---|---|---|
| Kontrolle (unbehandelt) | - | 0 |
| I Wirkstoff a) bekannt | 0.05 | 22 |
| II Fenpropimorph bekannt | 0.05 | 30 |
| III Fenpropidin bekannt | 0.05 | 33 |
| IV Tridemorph bekannt | 0.05 | 26 |
| Erfindungsgemäße Mischung | | |
| I + II Mischungsverhältnis 1 : 3 | 0.01 + 0.03 | 61 |
| I + III Mischungsverhältnis 1 : 3 | 0.01 + 0.03 | 62 |
| I + IV Mischungsverhältnis 1 : 3 | 0.01 + 0.03 | 58 |

Das Ergebnis zeigt, daß 0,04 % (0,01 + 0,03) der Mischung eine bessere fungizide Wirkung zeigen als 0,05 % der Einzelwirkstoffe.

Versuch 2: Erysiphe graminis-Test (Weizen) eradikativ

| Wirkstoff | Wirkstoffkonzentration in der Spritzbrühe in % | Wirkungsgrad in % der unbehandelten Kontrolle |
|---|---|---|
| Kontrolle (unbehandelt) | - | 0 |
| I Wirkstoff a) bekannt | 0.1 | 42 |
| | 0.05 | 15 |
| II Fenpropimorph bekannt | 0.1 | 72 |
| | 0.05 | 32 |

| Erfindungsgemäße Mischung: | beobachteter Wirkungsgrad | berechneter *) Wirkungsgrad |
|---|---|---|
| I + II 0.05 + 0.05 Mischungsverhältnis 1 : 1 | 65 | 42.2 |
| I + II 0.1 + 0.1 Mischungsverhältnis 1 : 1 | 100 | 83.8 |
| I + II 0.1 + 0.05 Mischungsverhältnis 2 : 1 | 82 | 60.6 |
| I + II 0.05 + 0.1 Mischungsverhältnis 1 : 2 | 95 | 73.2 |

*) Berechnet nach der Colby-Formel

## Patentansprüche

1. Fungizides Mittel, enthaltend eine synergistische fungizid wirksame Menge einer Mischung aus
   a) 2-(1,2,4-Triazol-1-ylmethyl)-2-(4-fluorphenyl)-3-(2-chlorphenyl)-oxiran der Formel I

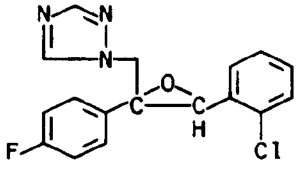

I

und

b) einer heterocyclischen Verbindung der Formel II

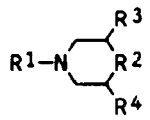

II,

in der
$R^1$ = Tridecyl ($CH_3$-$C_{12}H_{24}$-) oder den Rest

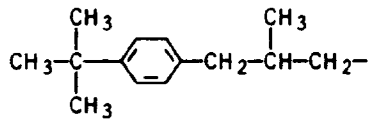

,

$R^2$ = $CH_2$ oder O
$R^3$, $R^4$ = Methyl oder H bedeutet oder deren pflanzenverträglichem Salz oder Metallkomplexverbindung.

2. Fungizid gemäß Anspruch 1 enthaltend als Verbindung b) die Verbindung 4-[3-(4-tert.-Butylphenyl)-2-methylpropyl]-cis-2,6-dimethylmorpholin der Formel

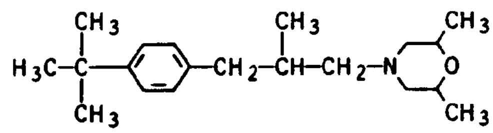

3. Fungizid gemäß Anspruch 1 enthaltend als Verbindung b) die Verbindung N-[3-(4-tert.-Butylphenyl)-2-methylpropyl]-piperidin der Formel

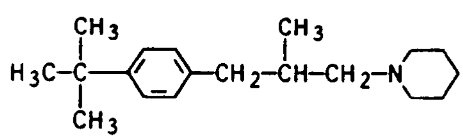

4. Fungizid gemäß Anspruch 1 enthaltend als Verbindung b) die Verbindung N-Tridecyl-cis-2,6-dimethylmorpholin der Formel

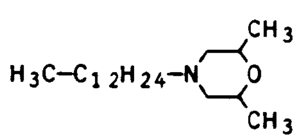

5. Verwendung der Mischung gemäß Anspruch 1 zur Bekämpfung von Pilzen.

6. Verfahren zur Bekämpfung von Pilzen, dadurch gekennzeichnet, daß man eine fungizid wirksame Menge einer Mischung gemäß Anspruch 1 auf die Pilze oder auf die durch Pilzbefall bedrohten Materialien, Flächen, Pflanzen oder Saatgüter einwirken läßt.

7. Fungizid gemäß Anspruch 1 enthaltend die Verbindungen a) und b) in einer eine synergistische Fungizidwirkung erzeugenden Menge.

**8.** Fungizid gemäß Anspruch 1 enthaltend die Verbindungen a) und b) im Gewichtsverhältnis a : b wie 5 : 1 bis 1 : 5.

## Claims

**1.** A fungicidal agent containing a synergistically fungicidally effective amount of a mixture consisting of

a) 2-(1,2,4-triazol-1-ylmethyl)-2-(4-fluorophenyl)-3-(2-chlorophenyl)-oxirane of the formula I

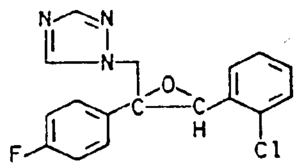

I

and

b) a heterocyclic compound of the formula II

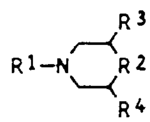

II,

where

$R^1$ = tridecyl ($CH_3$-$C_{12}H_{24}$-) or the radical

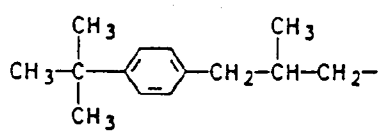

,

$R^2$ = $CH_2$ or O

$R^3$, $R^4$ = methyl or H, or a plant-tolerated salt or metal complex thereof.

**2.** A fungicide as claimed in claim 1, containing as compound b) the compound 4-[3-(4-tert.-butylphenyl)-2-methylpropyl]-cis-2,6-dimethylmorpholine of the formula

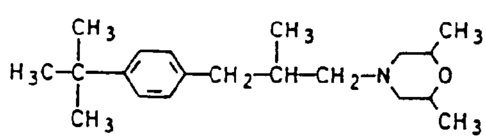

**3.** A fungicide as claimed in claim 1, containing as compound b) the compound N-[3-(4-tert.-butylphenyl)-2-methylpropyl ]-piperidine of the formula

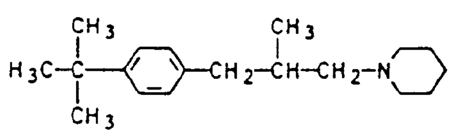

.

**4.** A fungicide as claimed in claim 1, containing as compound b) the compound N-tridecyl-cis-2,6-dimethylmorpholine of the formula

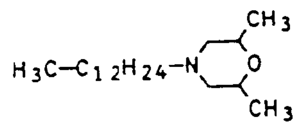

.

5. The use of the mixture as claimed in claim 1 for controlling fungi.

6. A method for controlling fungi, wherein a fungicidally effective amount of a mixture as claimed in claim 1 is allowed to act on the fungi, or the materials, areas, plants or seed threatened by fungus attack.

7. A fungicide as claimed in claim 1, containing the compounds a) and b) in such an amount as to produce a synergistic fungicidal action.

8. A fungicide as claimed in claim 1, containing the compounds a) and b) in a weight ratio of a : b of from 5 : 1 to 1 : 5.

## Revendications

1. Agent fongicide, contenant une quantité, à activité fongicide synergétique, d'un mélange de

   a) 2-(1,2,4-triazol-1-ylméthyl)-2-(4-fluorophényl)-3-(2-chlorophényl)-oxirane de la formule I

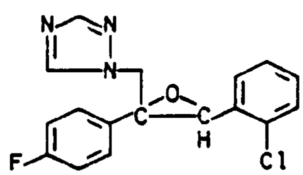

I

   et

   b) un composé hétérocyclique de la formule II

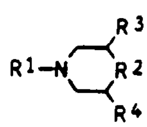

II,

   dans laquelle

   $R^1$ = Tridécyl ($CH_3$-$C_{12}$-$H_{24}$)- ou le reste

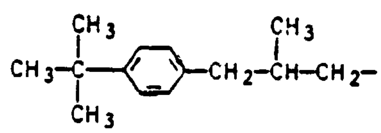

,

   $R^2$ = $CH_2$ ou O

   $R^3$, $R^4$ = méthyle ou H ou leurs sels ou complexe métallique acceptable par les plantes

2. Fongicide selon la revendication 1, contenant comme composé (b) le composé 4-[3-(4-tert.-butylphényl)-2-méthylpropyl]-cis-2,6-diméthylmorpholine de formule

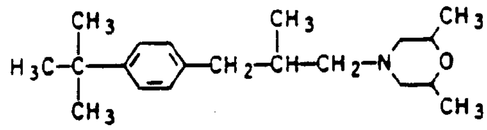

3. Fongicide selon la revendication 1, contenant comme composé (b) le composé N-[3-(4-tert.-butylphényl)-2-méthylpropyl] -piperidine de formule

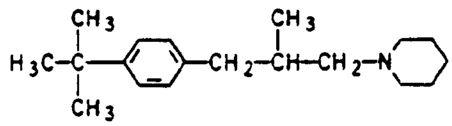

4. Fongicide selon la revendication 1, contenant comme composé (b) le composé N-tridécyl-cis-2,6-diméthylmorpholine de formule

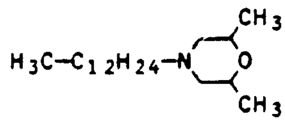

5. Utilisation du mélange selon la revendication 1 pour lutter contre les champignons.

6. Procédé de lutte contre les champignons, caractérisé par le fait que l'on fait agir une quantité à activité fongicide d'un mélange selon la revendication 1 sur les champignons ou sur les matériaux, surfaces, plantes ou semences menacés d'une attaque par des champignons.

7. Fongicide selon la revendication 1, contenant les composé a) et b) en quantités produisant un effet fongicide synergétique.

8. Fongicide selon la revendication 1 contenant les composés a) et b) dans un rapport en poids a/b de 5/1 à 1/5.